# EUROPÄISCHE PATENTSCHRIFT

(11) **EP 2 105 232 B1**
(45) Veröffentlichungstag und Bekanntmachung des Hinweises auf die Patenterteilung: **16.07.2014**
(21) Anmeldenummer: 09000326.0
(22) Anmeldetag: 13.01.2009
(51) Int. Cl.: B23D 47/04, B25B 5/06

(54) **Plattenaufteilanlage**
Device for dividing plates
Dispositif de découpe de plaques

(30) Priorität: 26.03.2008 DE 102008015765
(43) Veröffentlichungstag der Anmeldung: 30.09.2009
(73) Patentinhaber: Firma HOLZMA Plattenaufteiltechnik GmbH, 75365 Calw-Holzbronn (DE)
(72) Erfinder: Rieger, Klaus, 75328 Schömberg (DE); Ungerer, Markus, 75181 Pforzheim (DE)
(74) Vertreter: DREISS Patentanwälte PartG mbB

(56) Entgegenhaltungen:
- EP-A1- 0 208 079
- EP-A2- 0 571 339
- EP-A2- 1 068 932
- DE-T2- 69 201 080
- JP-A- 60 069 301

## Beschreibung

Die Erfindung betrifft eine Plattenaufteilanlage, insbesondere eine Plattenaufteilsäge, nach dem Oberbegriff des Anspruchs 1. Eine solche Plattenaufteilanlage ist der EP 0 571 339 A2 zu entnehmen.

Eine Plattenaufteilanlage der eingangs genannten Art ist aus der DE 10 2004 062 048 A1 bekannt. Bei dieser liegen großformatige plattenförmige Werkstücke auf einem Auflagetisch und werden mittels einer Vorschubvorrichtung zu einer Säge hin bewegt. Oberhalb der Sägelinie ist ein vertikal beweglicher Druckbalken angeordnet, der pneumatisch auf das Werkstück abgesenkt werden kann, wodurch das Werkstück zwischen dem Druckbalken und dem Auflagetisch verklemmt wird. Die bei der bekannten Plattenaufteilanlage verwendete Vorschubvorrichtung umfasst einen in Vorschubrichtung bewegbaren Balken, an dem sich mehrere Spannzangen befinden. Diese greifen an einem hinteren Rand eines plattenförmigen Werkstücks an, indem dieser zwischen zwei Klemmabschnitten einer Spannzange verklemmt wird.

Sowohl der Druckbalken als auch die Spannzangen bei der bekannten Plattenaufteilanlage werden pneumatisch betätigt. Hierzu verfügen diese jeweils über einen oder mehrere doppelt wirkende Pneumatikzylinder, durch die der Druckbalken beziehungsweise der bewegliche Klemmfinger einer Spannzange entweder in Klemmrichtung oder in Öffnungsrichtung bewegt werden kann.

EP 0 208 079 A1 beschreibt eine Plattenaufteilanlage mit zwei unabhängig voneinander ansteuerbaren Druckbalken, die von jeweiligen doppelt wirkenden Pneumatikzylindern bewegt werden. EP 0 571 339 A2 offenbart eine Spannzange, die von einem doppelt wirkenden Pneumatikzylinder betätigt wird.EP 1 068 932 A2 beschäftigt sich ganz allgemein mit einer pneumatischen Einrichtung zur Steuerung eines doppelt wirkenden Zylinders bei einer industriellen Klemmvorrichtung.

Aufgabe der vorliegenden Erfindung ist es, eine Plattenaufteilanlage bereitzustellen, mit der auch Platten aus einem druckempfindlichen Material zuverlässig aufgeteilt werden können, ohne dass die Platten durch die jeweiligen Klemmeinrichtungen, also beispielsweise den Druckbalken oder die Spannzangen beschädigt werden.

Diese Aufgabe wird durch eine Plattenaufteilanlage mit den Merkmalen des Anspruchs 1 gelöst. Vorteilhafte Weiterbildungen der Erfindung sind in Unteransprüchen angegeben.

Ein Vorteil der erfindungsgemäßen Plattenaufteilanlage liegt darin, dass die Klemmkraft, mit der die Klemmeinrichtung den Abschnitt des Werkstücks verklemmt bis unterhalb des Eigengewichtes des bewegliches Elementes der Klemmeinrichtung, reduziert werden kann, wenn das Werkstück aus einem druckempfindlichen Material besteht. Bei dieser Plattenaufteilanlage arbeitet die Klemmeinrichtung mindestens zeitweise mit einem "Gegendruck" in der in Öffnungsrichtung wirkenden Druckkammer. Die auf den zu klemmenden Abschnitt des Werkstücks einwirkende Klemmkraft wird somit letztendlich durch die Kraftresultierende bestimmt, die sich aus der in Klemmrichtung wirkenden Kraft (erste Druckkammer) und der in Öffnungsrichtung wirkenden Gegenkraft (zweite Druckkammer) ergibt. Somit können in beiden Druckkammern vergleichsweise hohe Drücke herrschen, was beispielsweise den Vorteil hat, dass solche hohen Drücke besser zu regeln sind als niedrige Drücke. Dennoch wird durch die in Öffnungsrichtung wirkenden Gegenkraft eine vergleichsweise geringe Klemmkraft realisiert.

Durch eine Veränderung der Druckdifferenz zwischen den beiden Druckkammern kann darüber hinaus die Klemmkraft variabel gesteuert werden, so dass ganz unterschiedliche Materialien optimal geklemmt werden können. In einer Betriebsart "sanftes Klemmen" wird nur eine geringe Klemmkraft erzeugt. Hierdurch wird der Einsatzbereich der erfindungsgemäßen Plattenaufteilanlage erweitert, da Platten aus ganz unterschiedlichen Materialien zuverlässig und ohne Beschädigungen verarbeitet werden können. Eine Beschädigung des geklemmten Abschnitts des Werkstücks beispielsweise durch ein Quetschen wird zuverlässig verhindert. Gleichzeitig wird sichergestellt, dass druckunempfindliche Materialien, beispielsweise Materialien mit hoher Dichte, dennoch zuverlässig mit entsprechend hoher Klemmkraft geklemmt werden können (Betriebsart "starkes Klemmen").

Vorgeschlagen wird ferner, dass die Plattenaufteilanlage mindestens eine erste Ventileinrichtung umfasst, welche eine erste Schaltstellung aufweist, in der gleichzeitig die erste und die zweite Druckkammer mit einer Druckquelle verbunden sind, und dass sie ein Wirkmittel umfasst, welches bewirkt, dass auch dann, wenn sich die erste Ventileinrichtung in der ersten Schaltstellung befindet, der Pneumatikzylinder in Klemmrichtung wirkt. Dies ist eine einfache Realisierung der beiden Betriebsarten "sanftes Klammen" und "starkes Klemmen".

Eine Möglichkeit zur Realisierung eines solchen Wirkmittels besteht darin, dass es eine zweite Ventileinrichtung umfasst, welche mindestens dann, wenn die erste Ventileinrichtung in der ersten Schaltstellung ist, den Druck in der ersten Druckkammer und/oder den Druck in der zweiten Druckkammer so beeinflusst, dass der Pneumatikzylinder in Klemmrichtung wirkt. Die reduzierte Klemmkraft wird also zumindest auch durch eine Druckdifferenz zwischen der ersten Druckkammer und der zweiten Druckkammer bewirkt.

Dabei wird besonders bevorzugt, wenn die zweite Ventileinrichtung mindestens ein erstes Druckregelventil umfasst, welches den Druck, mit dem die zweite Druckkammer beaufschlagt wird, mindestens dann, wenn die erste Ventileinrichtung in der ersten Schaltstellung ist, auf einen bestimmten konstanten Wert regelt. In der Betriebsart "sanftes Klemmen" kann so die in Öffnungsrichtung wirkende Gegenkraft sehr präzise eingestellt werden, was zu einer insgesamt präzisen Klemmkraft führt.

Möglich ist ferner, dass die zweite Ventileinrichtung ein zweites Druckregelventil umfasst, welches den Druck, mit dem die erste Druckkammer beaufschlagt werden kann, mindestens dann, wenn die erste Ventileinrichtung in der ersten Schaltstellung ist, auf einen gewünschten einstellbaren Wert regelt. Vor allem dann, wenn der Druck in der zweiten Druckkammer in der Betriebsart "sanftes Klemmen" auf einen bestimmten konstanten Wert geregelt wird, kann bei dieser Weiterbildung der erfindungsgemäßen Plattenaufteilanlage eine ganz bestimmte gewünschte Klemmkraft erzeugt werden. Besonders bevorzugt ist es dabei, wenn für bestimmte Materialien beziehungsweise Materialgruppen ein bestimmter Druck vorgegeben wird, auf den das zweite Druckregelventil den in der ersten Druckkammer herrschenden Druck zu regeln hat. Damit kann eine ganz individuelle Anpassung der Klemmkraft an das jeweilige Material erzielt werden.

Eine konstruktiv einfache Lösung besteht darin, dass die erste Ventileinrichtung zwei in Serie angeordnete Schaltventile umfasst, von denen das erste Schaltventil einen ersten Eingang des zweiten Schaltventils in einer ersten Schaltstellung mit der Druckquelle und in einer zweiten Schaltstellung mit einer drucklosen Umgebung verbindet und von denen das zweite Schaltventil seinen ersten Eingang in einer ersten Schaltstellung sperren und in einer zweiten Schaltstellung mit der zweiten Druckkammer verbindet. Auf diese Weise können sehr einfach die zwei Betriebsarten "sanftes Klemmen" und "starkes Klemmen" realisiert werden. Die Betriebsart "starkes Klemmen" kann beispielsweise auch verwendet werden, um den einen Klemmabschnitt rasch auf den anderen zuzubewegen, wodurch die Taktzeiten der Plattenaufteilanlage verkürzt werden. Das erste Schaltventil wirkt dabei als Umschalter zwischen "sanftem Klemmen" und "starkem Klemmen", wohingegen das zweite Schaltventil als Umschalter von der Betriebsart "Klemmen" in die Betriebsart "Öffnen" und umgekehrt dient.

Bei einer pneumatisch arbeitenden Klemmeinrichtung mit einem doppelt wirkenden Pneumatikzylinder ist ferner denkbar, dass das Wirkmittel, welches wenigstens zeitweise eine reduzierte Klemmkraft bewirkt, eine erste in Klemmrichtung wirkende Druckfläche der ersten Druckkammer und eine zweite in Öffnungsrichtung wirkende Druckfläche der zweiten Druckkammer umfasst, wobei die erste Druckfläche größer ist als die zweite Druckfläche. In diesem Fall könnten beide Druckkammern sogar mit dem gleichen Pneumatikdruck beaufschlagt werden, und dennoch würde eine reduzierte Klemmkraft erreicht werden. Diese Variante ist konstruktiv besonders einfach.

Erfindungsgemäß kann die Klemmeinrichtung als ersten Klemmabschnitt einen Druckbalken und als zweiten Klemmabschnitt einen Auflagetisch umfassen. Möglich ist aber auch, dass die Klemmeinrichtung eine Spannzange umfasst, wobei die Klemmabschnitte dann durch die Spannbacken der Spannzange gebildet werden, zwischen denen ein Randabschnitt des Werkstücks verklemmt wird.

Üblicherweise umfassen Plattenaufteilanlagen nicht nur eine, sondern mehrere Spannzangen. Um diese individuell öffnen beziehungsweise schließen zu können, ist es vorteilhaft, wenn jede Spannzange von einem eigenen zweiten Schaltventil angesteuert wird.

Um ein möglichst gleichzeitiges Schließen aller Spannzangen mit gleicher Klemmkraft zu erreichen, ist es vorteilhaft, wenn jede Spannzange von einem eigenen ersten Druckregelventil angesteuert wird. Bei diesem handelt es sich um jenes Ventil, welches den "Gegendruck" in der in Öffnungsrichtung wirkenden zweiten Druckkammer regelt.

Um ein schnelles Öffnen der Spannzangen zu erreichen, wird vorgeschlagen, dass die zweite Druckkammer mit einem Ausgang eines ODER-Ventils verbunden ist, dessen erster Eingang mit dem zweiten Schaltventil und dessen zweiter Eingang mit einem dritten Schaltventil verbunden ist, welches den zweiten Eingang in einer ersten Schaltstellung mit der Druckquelle und in einer zweiten Schaltstellung mit der drucklosen Umgebung verbindet.

Nachfolgend werden Ausführungsformen der Erfindung unter Bezugnahme auf die beiliegende Zeichnung näher erläutert. In der Zeichnung zeigen:
- Figur 1: eine schematische Seitenansicht einer Plattenaufteilanlage;
- Figur 2: ein schematisches Schaltbild einer Pneumatikschaltung zur Ansteuerung eines Druckbalkens der Plattenaufteilanlage von Figur 1;
- Figur 3: ein Flussdiagramm eines Verfahrens zum Betreiben des Druckbalkens der Plattenaufteilanlage von Figur 1;
- Figur 4: ein schematisches Schaltbild einer Pneumatikschaltung zur Ansteuerung von Spannzangen der Plattenaufteilanlage von Figur 1; und
- Figur 5: ein Flussdiagramm eines Verfahrens zum Betreiben der Spannzangen der Plattenaufteilanlage von Figur 1.

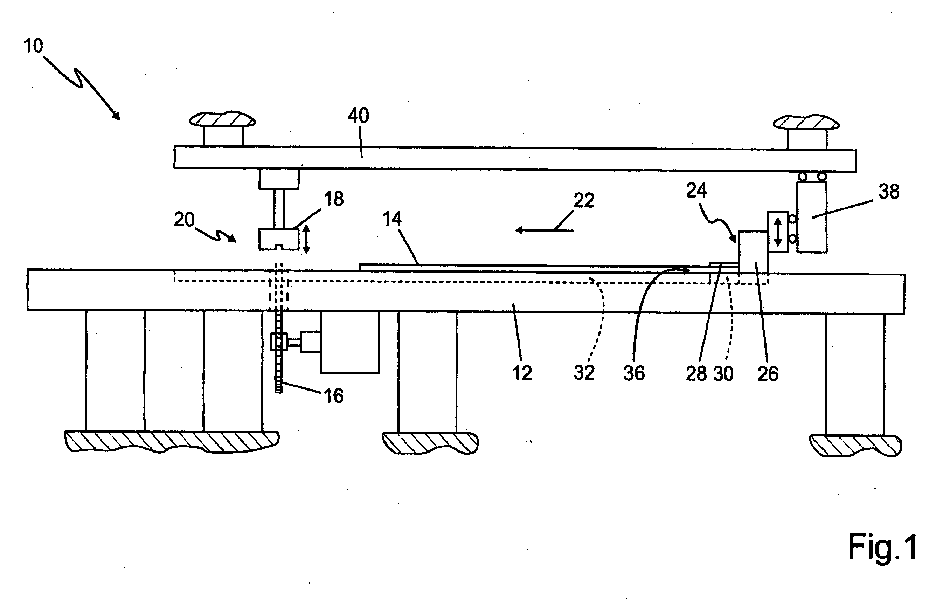

In Figur 1 trägt eine Plattenaufteilanlage insgesamt das Bezugszeichen 10. Sie umfasst einen horizontalen Auflagetisch 12, auf dem ein großformatiges plattenförmiges Werkstück 14 liegt.

Die Plattenaufteilanlage 10 umfasst ferner eine Säge 16, die in einer Richtung senkrecht zur Zeichnungsebene von Figur 1 verfahren werden kann, und die darüber hinaus in einer Richtung senkrecht zum Auflagetisch 12, also vertikal bewegt werden kann. Mit der Säge 16 kann das Werkstück 14 in einzelne Streifen aufgeteilt werden. Um während des Sägens das Werkstück 14 sicher in Position zu halten, ist oberhalb der Säge 16 ein vertikal beweglicher Druckbalken 18 vorhanden. Dieser kann während des Sägens auf das Werkstück 14 abgesenkt werden, so dass das Werkstück 14 zwischen Druckbalken 18 und Auflagetisch 12 verklemmt ist. Insoweit bilden der Druckbalken 18 und der Auflagetisch 12 eine erste Klemmeinrichtung 20 der Plattenaufteilanlage 10.

Um von der Säge 16 in einzelne Streifen aufgeteilt werden zu können, ist das Werkstück 14 in Vorschubrichtung (Pfeil 22) bewegbar. Hierzu sind mehrere senkrecht zur Plattenaufteilanlage 10 verteilt angeordnete Spannzangen vorgesehen, von denen in Figur 1 nur eine mit den Bezugszeichen 24 sichtbar ist. Die Spannzange 24 umfasst einen Haltekörper 26, an dem zwei Spannbacken 28 und 30 angebracht sind. Die untere Spannbacke 30 ist in einer Nut 32 des Auflagetisches 12 angeordnet und gegenüber dem Haltekörper 26 im Wesentlichen unbeweglich. Die obere Spannbacke 28 kann dagegen in vertikaler Richtung gegenüber dem Haltekörper 26 bewegt werden. Auf diese Weise kann zwischen oberer Spannbacke 28 und unterer Spannbacke 30 ein hinterer Randabschnitt des Werkstücks 14 verklemmt werden. Insoweit bilden die beiden Spannbacken 28 und 30 eine zweite Klemmeinrichtung 36 der Plattenaufteilanlage 10.

Die Spannzangen 24 sind an einem senkrecht zur Blattebene verlaufenden Träger 38 befindlich, der längs zweier horizontaler Schienen, von denen in Figur 1 nur eine mit dem Bezugszeichen 40 sichtbar ist, längs zur Vorschubrichtung 22 bewegt werden kann.

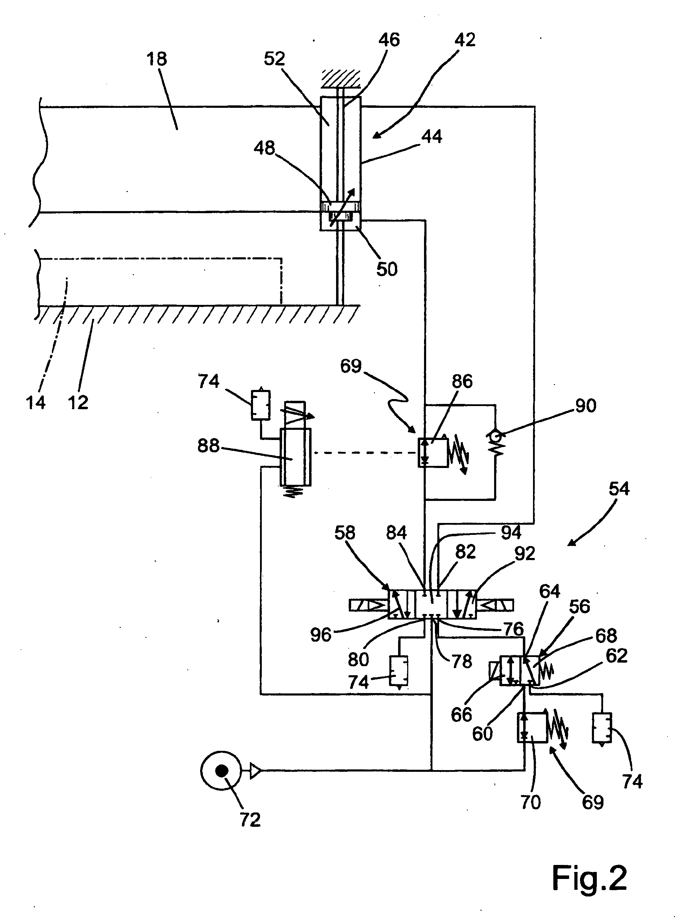

Der Druckbalken 18 wird in vertikaler Richtung pneumatisch bewegt. Die entsprechende pneumatische Schaltung wird nun unter Bezugnahme auf Figur 2 erläutert: Der Druckbalken 18 ist seitlich jeweils mit einem doppelt wirkenden Pneumatikzylinder verbunden, von denen in Figur 2 nur einer mit dem Bezugszeichen 42 gezeigt ist. Der Pneumatikzylinder 42 verfügt über ein Gehäuse 44, welches mit dem Druckbalken 18 verbunden ist. Eine Kolbenstange 46 ist dagegen starr und mit einem tellerförmigen Kolben 48 verbunden. Das Gehäuse 44 ist gegenüber dem Kolben 48 und der Kolbenstange 46 also in deren Längsrichtung verschieblich auf diesen geführt. Der Innenraum des Gehäuses 44 wird durch den Kolben 48 in eine erste Druckkammer 50 und in eine zweite Druckkammer 52 unterteilt.

Die in Figur 2 gezeigte Pneumatikschaltung umfasst eine erste Ventileinrichtung 54 mit einem ersten Schaltventil 56 und zweiten Schaltventil 58. Bei dem ersten Schaltventil 56 handelt es sich um ein 3/2-Wegeventil, welches also auf der einen Seite einen ersten Anschluss 60 und einen zweiten Anschluss 62 und auf der anderen Seite einen dritten Anschluss 64 aufweist. Das erste Schaltventil 56 wird elektromagnetisch mittels Signalen von einer nicht dargestellten elektronischen Steuer- und Regeleinrichtung betätigt. Es verfügt über zwei Schaltstellungen.

In einer ersten Schaltstellung 66 ist der erste Anschluss 60 mit dem dritten Anschluss 64 verbunden, wohingegen der zweite Anschluss 62 gesperrt ist. In einer zweiten Schaltstellung 68 ist der erste Anschluss 60 gesperrt, wohingegen der zweite Anschluss 64 verbunden ist. Der erste Anschluss 60 des ersten Schaltventils 56 ist mit einem Wirkmittel, nämlich einer zweiten Ventileinrichtung 69 verbunden, welche als erstes Druckregelventil 70 ausgebildet ist. Dieses ist wiederum mit einer Druckquelle 72 verbunden. Der zweite Anschluss 62 des ersten Schaltventils 56 ist mit einer drucklosen Umgebung 74 verbunden. Das erste Druckregelventil 70 ist auf einen bestimmten vorgegebenen konstanten Wert eingestellt.

Beim zweiten Schaltventil 58 handelt es sich um ein 5/3-Wegeventil, welches auf der einen Seite drei Anschlüsse 76 - 80 und auf der anderen Seite zwei Anschlüsse 82 und 84 aufweist. Der erste Anschluss 76 ist mit dem Anschluss 64 des ersten Schaltventils 56 verbunden. Der zweite Anschluss 78 ist mit der Druckquelle 72 verbunden. Der dritte Anschluss 80 ist mit der drucklosen Umgebung 74 verbunden. Auf der anderen Seite ist der vierte Anschluss 82 mit der zweiten Druckkammer 52 verbunden, wohingegen der fünfte Anschluss 84 über ein zur zweiten Ventileinrichtung 69 gehörendes zweites Druckregelventil 86 mit der ersten Druckkammer 50 verbunden ist. Der Regeldruck des zweiten Druckregelventils 86 kann über ein Proportionaldruckregelventil 88, welches wiederum von der elektronischen Steuer- und Regeleinrichtung angesteuert wird, eingestellt werden. Parallel zum zweiten Druckregelventil 86 ist ferner ein federbelastetes Rückschlagventil 90 geschaltet, welches zur ersten Druckkammer 50 sperrt.

Das zweite Schaltventil 58 verfügt über drei Schaltstellungen 92, 94 und 96. In der ersten Schaltstellung 92 ist der erste Anschluss 76 gesperrt, der zweite Anschluss 78 mit dem vierten Anschluss 82 verbunden, und der dritte Anschluss 80 mit dem fünften Anschluss 84 verbunden. In der zweiten Schaltstellung 94 sind alle Anschlüsse 76 - 84 gesperrt. In der dritten Schaltstellung 96 ist der erste Anschluss 76 mit dem vierten Anschluss 82 verbunden, der zweite Anschluss 78 mit dem fünften Anschluss 84, und der dritte Anschluss 80 ist gesperrt. Betätigt werden das zweite Schaltventil 58 ebenso wie das Proportionaldruckregelventil 88 und das erste Schaltventil 56 elektromagnetisch.

Der Druckbalken 18 kennt insgesamt vier Betriebszustände, nämlich zunächst den Betriebszustand "starkes Klemmen", den Betriebszustand "sanftes Klemmen", und den Betriebszustand "Öffnen". In einem vierten Betriebszustand "Stillstand" ist der Druckbalken 18 in seiner aktuellen Position blockiert. Im Betriebszustand "sanftes Klemmen" kann die Klemmkraft, die der Druckbalken 18 auf das Werkstück 14 ausübt, auf noch darzustellende Art und Weise eingestellt werden.

Im Betriebszustand "starkes Klemmen" befindet sich das erste Schaltventil 56 in seiner zweiten Schaltstellung 68 und das zweite Schaltventil 58 in seiner dritten Schaltstellung 96. Die zweite in Öffnungsrichtung wirkende Druckkammer 52 ist somit letztlich mit der drucklosen Umgebung 74 verbunden, wohingegen die erste, in Klemmrichtung wirkende Druckkammer 50 mit dem durch das zweite Druckregelventil 86 eingestellten Druck beaufschlagt wird. Dieser ist vorzugsweise maximal. Hierdurch wird auch beim Absenken des Druckbalkens 18 auf das Werkstück 14 eine maximale Absenkgeschwindigkeit erreicht, und beim Klemmen eine starke Klemmkraft.

In dem Betriebszustand "sanftes Klemmen" befindet sich das zweite Schaltventil 58 weiterhin in seiner dritten Schaltstellung 96, wohingegen sich das erste Schaltventil 56 in seiner ersten Schaltstellung 66 befindet. Während die erste Druckkammer 50 also weiterhin mit dem durch das zweite Druckregelventil 86 vorgegebenen Druck beaufschlagt wird, herrscht in der zweiten Druckkammer 52 nun der vom ersten Druckregelventil 70 vorgegebene reduzierte, konstante "Gegendruck". Die auf das Werkstück 14 einwirkende Klemmkraft ergibt sich also aus der Differenz des in der ersten Druckkammer 50 herrschenden und in Klemmrichtung wirkenden Pneumatikdrucks zu dem in der zweiten Druckkammer 52 herrschenden und in Öffnungsrichtung wirkenden Pneumatikdruck, sowie aus Eigengewicht des beweglichen Teiles der Klemmeinrichtung. Diese Druckdifferenz kann über das Proportionaldruckregelventil 88 und das zweite Druckregelventil 86 dem Material des aktuell auf dem Auflagetisch liegenden Werkstücks 14 entsprechend gewählt werden. Die sich ergebende Klemmkraft, die der Druckbalken 18 auf das Werkstück 14 ausübt, ist somit geringer als in dem ersten, oben beschrieben Betriebszustand "starkes Klemmen", wodurch auch ein Werkstück 14 aus einem druckempfindlichen Material zwischen Druckbalken 18 und Auflagetisch 12 verklemmt werden kann, ohne dass die Gefahr eines Quetschens mit entsprechender Beschädigung des Werkstücks 14 besteht. Vorzugsweise stellt die Steuer- und Regeleinrichtung, durch welche die Plattenaufteilanlage 10 gesteuert wird, verschiedene Parameteransätze für vorgegebene Materialgruppen zur Verfügung, aus denen der Benutzer auswählen kann, und entsprechend denen das Proportionaldruckventil 88 und das zweite Druckregelventil 86 angesteuert werden.

Zum Öffnen wird das zweite Schaltventil 58 in seine erste Schaltstellung 92. Nun ist die zweite, in Öffnungsrichtung wirkende Druckkammer 52 direkt mit der Druckquelle 72 verbunden, wohingegen die erste, in Schließrichtung wirkende Druckkammer 50 mit der drucklosen Umgebung 74 verbunden ist. Damit wird eine maximale Öffnungsgeschwindigkeit des Druckbalkens 18 erreicht, das verklemmte Werkstück 14 wird also schnellstmöglich freigegeben.

Um den Druckbalken 18 in einer bestimmten Position halten zu können, wird das zweite Schaltventil 58 in seine Schaltstellung 94 gebracht. In dieser sind die beiden Druckkammern 50 und 52 jeweils abgeschlossen, so dass sich der Druckbalken 18 nicht bewegen kann.

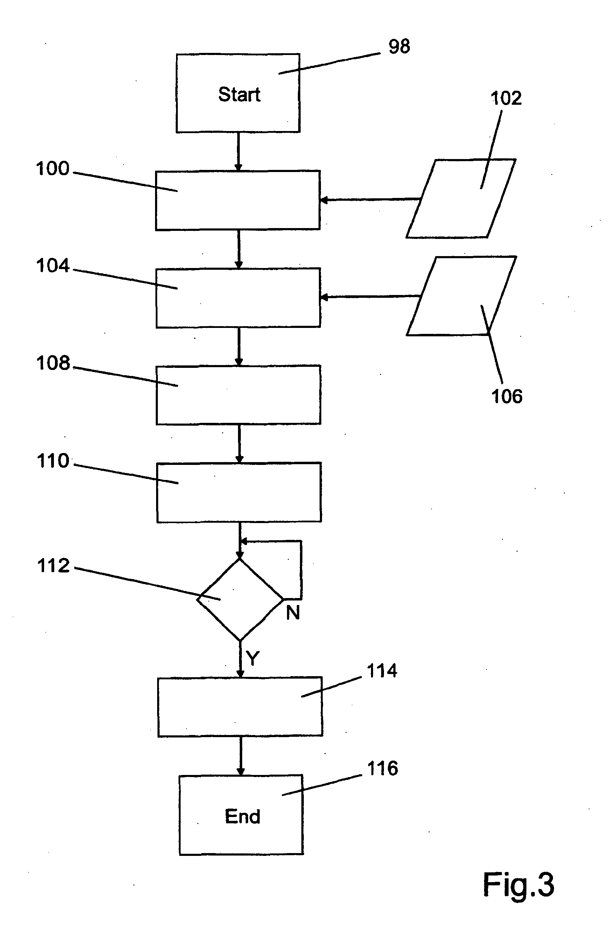

Eine typische Vorgehensweise zum Klemmen eines Werkstücks zwischen Druckbalken 18 und Auflagetisch 12 wird nun unter Bezugnahme auf Figur 3 erläutert. Nach einem Start in 98 wird in 100 das Proportionaldruckregelventil 88 entsprechend den ausgewählten Materialparametern (Block 102) für das Werkstück 14 ausgewählt. Die Höhe des Anpressdruckes ist dabei in Parametersätzen für eine bestimmte Normbreite des Werkstücks hinterlegt, bei breiteren Teilen wird der Druck linear entsprechend der Breite oder in Stufen erhöht. Für kleinere Streifenbreiten als eine Normbreite werden generell die minimalen Druckeinstellungen gewählt.

Beispielsweise über die Spannzangen 24 wurde vorab die Höhe des aktuellen Werkstücks 14 erfasst (Block 106). In 104 wird nun zunächst der Betriebszustand "starkes Klemmen" herbeigeführt, in dem der Druckbalken 18 mit maximaler Geschwindigkeit auf das Werkstück 14 zu bewegt wird. Kurz vor Erreichen der Oberseite des Werkstücks 14 wird in 108 der Gegendruck in der zweiten Druckkammer 52 aktiviert (Betriebszustand "sanftes Klemmen"). In 110 wird der Druckbalken nun mit geringerer Geschwindigkeit auf das Werkstück 14 zu bewegt. In 112 wird abgefragt, ob die Position des Druckbalkens 18, die über ein in Figur 2 nicht gezeigtes Wegmesssystem erfasst wird, mit der in 106 vorgegebenen Höhe des Werkstücks 14 innerhalb eines gewissen Toleranzfensters übereinstimmt oder darunter liegt. Ist die Antwort in 112 nein, erfolgt ein Rücksprung zur Abfrage 112. Ist das Ergebnis der Abfrage in 112 ja, beginnt in 114 die Säge 16 damit, das Werkstück 14 zu zersägen, da nun davon ausgegangen werden kann, dass das Werkstück 14 vom Druckbalken 18 sicher und mit der gewünschten Klemmkraft geklemmt wird. Das Verfahren endet in 116.

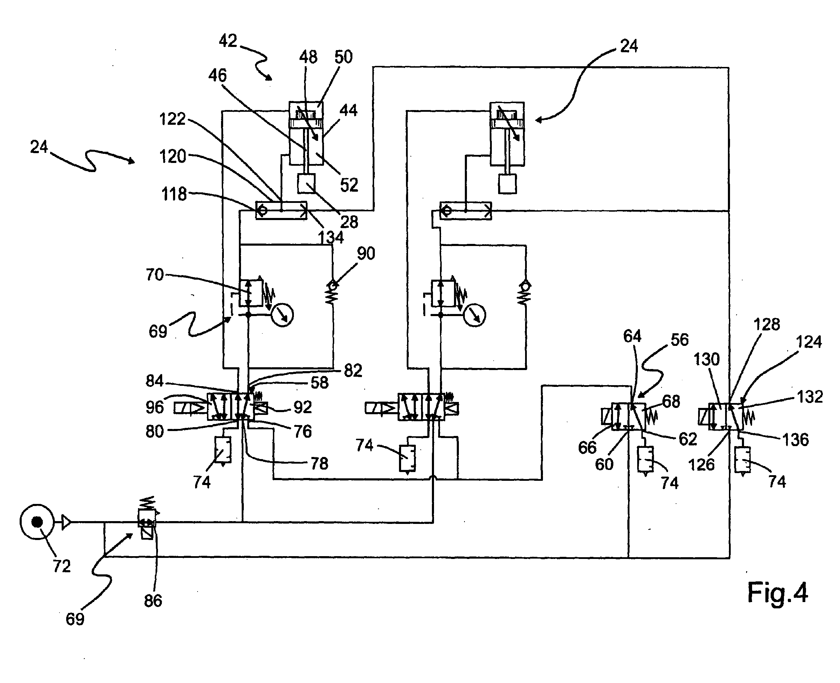

Nun wird unter Bezugnahme auf Figur 4 die pneumatische Ansteuerung der Spannzangen 24 erläutert. Dabei tragen solche Elemente und Bereiche, die äquivalente Funktionen zu Elementen und Bereichen von Figur 2 aufweisen, die gleichen Bezugszeichen. Sie sind darüber hinaus im Normalfall nicht nochmals im Detail erläutert. Aus Darstellungsgründen sind Bezugszeichen nur für eine Spannzange 24 eingetragen.

Zunächst ist aus Figur 4 sofort ersichtlich, dass dort das zweite Schaltventil 58 nur als 5/2-Wegeventil ausgebildet ist. Es fehlt jene Schaltstellung, in der sämtliche Anschlüsse gesperrt sind. Man erkennt ferner, dass der Pneumatikzylinder
42, der die obere Spannbacke 28 bewegt, mit einem stationären Gehäuse 44 und dafür mit einer beweglichen Kolbenstange 46 und einem beweglichen Kolben 48 ausgestattet ist. Bei dem Pneumatikzylinder 42 der Spannzange 24 ist daher die erste in Schließrichtung wirkende Druckkammer 50 in Figur 4 oben und die zweite in Öffnungsrichtung wirkende Druckkammer 52 unten.

Man erkennt ferner, dass jede Spannzange 24 (in Figur 4 sind beispielhaft zwei Spannzangen gezeigt, wobei tatsächlich üblicherweise deutlich mehr vorhanden sind) von einem eigenen zweiten Schaltventil 58 angesteuert wird und über ein eigenes erstes Druckregelventil 70 verfügt. Dieses ist zwischen dem vierten Anschluss 82 des zweiten Schaltventils 58 und einem ersten Eingang 118 eines ODER-Ventils 120 geschaltet, dessen Ausgang 122 wiederum mit der zweiten Druckkammer 52 verbunden ist. Parallel zu jedem ersten Druckregelventil 70 ist ein Rückschlagventil 90 angeordnet. Allerdings werden alle Spannzangen 24 über ein gemeinsames erstes Schaltventil 56 angesteuert.

Die pneumatische Schaltung von Figur 4 verfügt ferner über ein drittes Schaltventil 124, welches identisch zum ersten Schaltventil 56 ausgebildet ist, mit einem ersten Anschluss 126 und einem zweiten Anschluss 128 und einer ersten Schaltstellung 130 und einer zweiten Schaltstellung 132. Der erste Anschluss 126 ist direkt mit der Druckquelle 72 verbunden, der zweite Anschluss 128 mit einem zweiten Eingang 134 des ODER-Ventils 120. Ein dritter Anschluss 136 des dritten Schaltventils 124 ist mit der drucklosen Umgebung 74 verbunden.

Man erkennt ferner aus Figur 4, dass das zweite Druckregelventil 86 zwischen der Druckquelle 72 und den jeweiligen zweiten Schaltventilen 58 angeordnet ist.

Die grundsätzlichen Funktionen der einzelnen Elemente der pneumatischen Schaltung von Figur 4 entsprechen denen von Figur 2, so dass der Einfachheit halber auf die diesbezügliche Funktionsbeschreibung Bezug genommen wird. Es sei lediglich erwähnt, dass sich im Betriebszustand "starkes Klemmen" das dritte Schaltventil 124 in seiner zweiten Schaltstellung 132 befindet, so dass die zweite Druckkammer 52 über das ODER-Ventil 120 sowohl über das Rückschlagventil 90, die zweite Schaltstellung 96 des zweiten Schaltventils 58, und die zweite Schaltstellung 68 des ersten Schaltventils 56 mit der drucklosen Umgebung 74 als auch über den zweiten Eingang 134 des ODER-Ventils 120 und die zweite Schaltstellung 132 des dritten Schaltventils 124 mit der drucklosen Umgebung 74 verbunden sein kann.

Für ein Öffnen der Spannzangen 24 wird das dritte Schaltventil 124 dagegen in seine erste Schaltstellung 130 gebracht, wodurch die zweite Druckkammer 52 unmittelbar mit der Druckquelle 72 verbunden ist. Im Betriebszustand "sanftes Klemmen" dagegen befindet sich das dritte Schaltventil 124 in seiner zweiten Schaltstellung 132, wohingegen das erste Schaltventil 58 in seiner ersten Schaltstellung 66 und die zweiten Schaltventile 58 in ihren zweiten Schaltstellungen 96 sind.

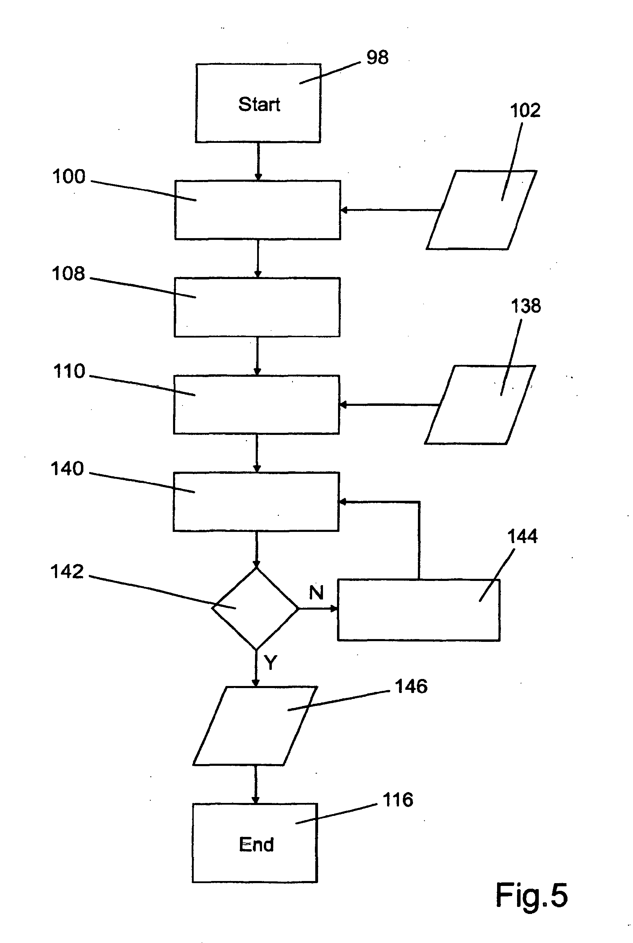

Das in Figur 5 gezeigte Verfahren zum Betreiben der Spannzangen 24 ähnelt dem Verfahren von Figur 3, so dass nachfolgend nur auf Unterschiede eingegangen wird: Zunächst fällt auf, dass ein Vorpositionieren mit großer Geschwindigkeit bei den Spannzangen 24 nicht stattfindet, sondern stattdessen sofort in 108 der Gegendruck durch entsprechendes Schalten des ersten Schaltventils 56 eingeschaltet wird. Über die Breite des Werkstücks (Block 138) werden von der Steuer- und Regeleinrichtung nur jene Spannzangen 24 geschlossen (Block 110), die im Breitenbereich des Werkstücks 14 liegen. Dies bedeutet, dass nur solche Spannzangen 24 tatsächlich das Werkstück 14 klemmen, deren Spannbacken 28 und 30 noch vollständig im Bereich des Werkstücks 14 liegen. Hierdurch wird eine Beschädigung der seitlichen Kanten des Werkstücks 14 vermieden.

Mindestens eine der Spannzangen 24 verfügt über ein in den Figuren nicht gezeigtes Messsystem, welches die Höhe des Werkstücks 14 erfasst (Block 140 in Figur 5). Um sicherzustellen, dass die Spannzangen 24 geschlossen sind und das Werkstück 24 zwischen den beiden Spannbacken 28 und 30 verklemmt ist, wird anhand der erfassten Höhe des Werkstücks 14 geprüft, ob die obere Spannbacke 28 ihre obere Endstellung verlassen hat (Abfrage 142). Ist dies nicht der Fall, wird das zweite Druckregelventil 86 so angesteuert, dass sich die in Klemmrichtung wirkende Kraft erhöht (Block 144). Wird festgestellt, dass die Spannbacke 28 die obere Endlage verlassen hat, wird in 146 die tatsächliche Materialhöhe des Werkstücks 14 erfasst.

## Patentansprüche

1. Plattenaufteilanlage (10), insbesondere Plattenaufteilsäge, mit mindestens einer Klemmeinrichtung (20; 36) mit einem ersten und einem zweiten Klemmabschnitt (12, 18; 28, 30), wobei mindestens einer der Klemmabschnitte (18; 28) auf den jeweils anderen derart zubewegt werden kann, dass ein Abschnitt eines Werkstücks (14) zwischen den Klemmabschnitten (12, 18; 28, 30) verklemmbar ist, wobei mindestens einer der Klemmabschnitte (18; 28) mit mindestens einem doppelt wirkenden Pneumatikzylinder (42) gekoppelt ist, der eine erste, in eine Klemmrichtung wirkende Druckkammer (50) und eine zweite, in eine Öffnungsrichtung wirkende Druckkammer (52) aufweist, **dadurch gekennzeichnet, dass** die beiden Druckkammern (50, 52) wenigstens zeitweise gleichzeitig mit einer Druckquelle verbindbar sind, und dass die Klemmkraft der Klemmeinrichtung (20; 36) durch die Änderung der Differenz des Druckes in den Druckkammern (50, 52) des doppelt wirkenden Pneumatikzylinders (42) gesteuert variabel ist.

2. Plattenaufteilanlage (10) nach Anspruch 1, **dadurch gekennzeichnet, dass** sie mindestens eine erste Ventileinrichtung (54) umfasst, welche eine erste Schaltstellung aufweist, in der gleichzeitig die erste (50) und die zweite Druckkammer (52) mit einer Druckquelle (72) verbunden sind, und dass sie ein Wirkmittel (69) umfasst, welches bewirkt, dass auch dann, wenn sich die erste Ventileinrichtung (54) in der ersten Schaltstellung befindet, der Pneumatikzylinder (42) in Klemmrichtung wirkt.

3. Plattenaufteilanlage nach Anspruch 2, **dadurch gekennzeichnet, dass** das Wirkmittel eine zweite Ventileinrichtung (69) umfasst, welche mindestens dann, wenn die erste Ventileinrichtung (54) in der ersten Schaltstellung ist, den Druck in der ersten Druckkammer (50) und/oder den Druck in der zweiten Druckkammer (52) so beeinflusst, dass der Pneumatikzylinder (42) in Klemmrichtung wirkt.

4. Plattenaufteilanlage (10) nach Anspruch 3, **dadurch gekennzeichnet, dass** die zweite Ventileinrichtung (69) mindestens ein erstes Druckregelventil (70) umfasst, welches den Druck, mit dem die zweite Druckkammer (52) beaufschlagt wird, mindestens dann, wenn die erste Ventileinrichtung (54) in der ersten Schaltstellung ist, auf einen bestimmten konstanten Wert regelt.

5. Plattenaufteilanlage (10) nach einem der Ansprüche 3 oder 4, **dadurch gekennzeichnet, dass** die zweite Ventileinrichtung (69) ein zweites Druckregelventil (86) umfasst, welches den Druck, mit dem die erste Druckkammer (50) beaufschlagt werden kann, mindestens dann, wenn die erste Ventileinrichtung (54) in der ersten Schaltstellung ist, auf einen gewünschten einstellbaren Wert regelt.

6. Plattenaufteilanlage (10) nach einem der Ansprüche 2 bis 5, **dadurch gekennzeichnet, dass** die erste Ventileinrichtung (54) zwei in Serie angeordnete Schaltventile (54) umfasst, von denen das erste Schaltventil (56) einen ersten Eingang des zweiten Schaltventils (58) in einer ersten Schaltstellung mit der Druckquelle (72) und in einer zweiten Schaltstellung mit einer drucklosen Umgebung (74) verbindet, und von denen das zweite Schaltventil (58) seinen ersten Eingang in einer ersten Schaltstellung sperren und in einer zweiten Schaltstellung mit der zweiten Druckkammer (52) verbindet.

7. Plattenaufteilanlage nach einem der Ansprüche 2 bis 6, **dadurch gekennzeichnet, dass** das Wirkmittel eine erste in Klemmrichtung wirkende Druckfläche der ersten Druckkammer und eine zweite in Öffnungsrichtung wirkende Druckfläche der zweiten Druckkammer umfasst, wobei die erste Druckfläche größer ist als die zweite Druckfläche.

8. Plattenaufteilanlage (10) nach einem der vorhergehenden Ansprüche, **dadurch gekennzeichnet, dass** die Klemmeinrichtung (20) als ersten Klemmabschnitt einen Druckbalken (18) und als zweiten Klemmabschnitt einen Auflagetisch (12) umfasst.

9. Plattenaufteilanlage (10) nach einem der Ansprüche 1 bis 7, **dadurch gekennzeichnet, dass** die Klemmeinrichtung (36) mindestens zwei Spannbacken (38, 30) einer Spannzange (24) umfasst.

10. Plattenaufteilanlage (10) nach den Ansprüchen 5 und 8, **dadurch gekennzeichnet, dass** sie mehrere Spannzangen (24) umfasst, welche jeweils von einem eigenen zweiten Schaltventil (58) angesteuert werden.

11. Plattenaufteilanlage (10) nach den Ansprüchen 4 und 9 oder 10, **dadurch gekennzeichnet, dass** sie mehrere Spannzangen (24) umfasst, welche jeweils von einem eigenen ersten Druckregelventil (70) angesteuert werden.

12. Plattenaufteilanlage (10) nach einem der Ansprüche 10 oder 11, **dadurch gekennzeichnet, dass** die zweite Druckkammer (52) mit einem Ausgang eines Oder-Ventils (120) verbunden ist, dessen erster Eingang mit dem zweiten Schaltventil (58) und dessen zweiter Eingang mit einem dritten Schaltventil (124) verbunden ist, welches den zweiten Eingang in einer ersten Schaltstellung mit der Druckquelle (72) und in einer zweiten Schaltstellung mit der drucklosen Umgebung (74) verbindet.

## Claims

1. A panel sizing system (10), in particular a panel sizing saw, having at least one clamping device (20; 36) with a first and a second clamping portion (12, 18; 28, 30), in which at least one of the clamping portions (18; 28) can be moved toward the other in such a manner that a portion of a workpiece (14) can be clamped between the clamping portions (12, 18; 28, 30), and a least one of the clamping portions (18; 28) is coupled to a double action pneumatic cylinder (42) that has a first pressure chamber (50) acting in the clamping direction and a second pressure chamber (52) acting in an opening direction, **characterized in that** the two pressure chambers (50, 52) can simultaneously communicate, at least intermittently, with a pressure source; and that the clamping force of the clamping device (20; 36) is variable in a controlled fashion by means of the variation in the difference in the pressure in the pressure chambers (50, 52) of the double action pneumatic cylinder (42).

2. The panel sizing system (10) of claim 1, **characterized in that** it includes at least one first valve device (54), which has a first switch position in which the first (50) and the second (52) pressure chambers simultaneously communicate with a pressure source (72); and that it includes an active means (69), which has the effect that even whenever the first valve device (54) is in the first switch position, the pneumatic cylinder (42) acts in the clamping direction.

3. The panel sizing system of claim 2, **characterized in that** the active means includes a second valve device (69), which, at least whenever the first valve device (54) is in the first switch position, varies the pressure in the first pressure chamber (50) and/or the pressure in the second pressure chamber (52) in such a manner that the pneumatic cylinder (42) acts in the clamping direction.

4. The panel sizing system (10) of claim 3, **characterized in that** the second valve device (69) includes at least one first pressure regulating valve (70), which, at least whenever the first valve device (54) is in the first switch position, regulates the pressure to which the second pressure chamber (52) is subjected to a defined constant value.

5. The panel sizing system (10) of one of claims 3 or 4, **characterized in that** the second valve device (69) includes a second pressure regulating valve (86), which, at least whenever the first valve device (54) is in the first switch position, regulates the pressure to which the first pressure chamber (50) is subjected to a desired adjustable value.

6. The panel sizing system (10) of one of claims 2-5, **characterized in that** the first valve device (54) includes two on-off valves (54) connected in series, of which the first on-off valve (56) causes a first inlet of the second on-off valve (58) to communicate with the pressure source (72) in a first switch position and with a pressureless environment (74) in a second switch position, and of which the second on-off valve (58) blocks its first inlet in a first switch position and in a second switch position causes it to communicate with the second pressure chamber (52).

7. The panel sizing system of one of claims 2-6, **characterized in that** the active means includes a first pressure face of the first pressure chamber acting in the clamping direction and a second pressure face of the second pressure chamber acting in the opening direction, and the first pressure face is larger than the second pressure face.

8. The panel sizing system (10) of one of the foregoing claims, **characterized in that** the clamping device (20) includes a pressure beam (18) as its first clamping portion and a supporting table (12) as its second clamping portion.

9. The panel sizing system (10) of one of claims 1-7, **characterized in that** the clamping device (36) includes at least two clamping jaws (38, 30) of a collet chuck (24).

10. The panel sizing system (10) of claims 5 and 8, **characterized in that** it includes a plurality of collet chucks (24), each of which is triggered by its own second on-off valve (58).

11. The panel sizing system (10) of claims 4 and 9 or 10, **characterized in that** it includes a plurality of collet chucks (24), each of which is triggered by its own first pressure regulating valve (70).

12. The panel sizing system (10) of one of claims 10 or 11, **characterized in that** the second pressure chamber (52) communicates with one outlet of an OR valve (120), the first inlet of which communicates with the second on-off valve (58) and the second inlet of which communicates with a third on-off valve (124), which causes the second inlet to communicate with the pressure source (72) in a first switch position and with the pressureless environment (74) in a second switch position.

## Revendications

1. Dispositif de découpe de plaques (10), en particulier scie de découpe de plaques, comprenant au moins un dispositif de serrage (20; 36) ayant des première et deuxième portions de serrage (12, 18; 28, 30), l'une au moins des portions de serrage (18; 28) pouvant être déplacée en direction respectivement de l'autre de telle manière qu'une portion d'une pièce (14) peut être serrée entre lesdites portions de serrage (12, 18; 28, 30), l'une au moins des portions de serrage (18; 28) étant couplée avec au moins un vérin pneumatique à double effet (42) qui présente une première chambre de pression (50) agissant dans une direction de serrage et une deuxième chambre de pression (52) agissant dans une direction d'ouverture, **caractérisé par le fait que** les deux chambres de pression (50, 52) peuvent être connectées, au moins temporairement, simultanément à une source de pression et que la force de serrage du dispositif de serrage (20; 36) est variable de manière commandée en modifiant la différence de la pression dans les chambres de pression (50, 52) dudit vérin pneumatique à double effet (42).

2. Dispositif de découpe de plaques (10) selon la revendication 1, **caractérisé par le fait qu'**il comprend au moins un premier dispositif à soupape (54) qui présente une première position de commutation dans laquelle les première (50) et deuxième (52) chambres de pression sont connectées simultanément à une source de pression (72), et qu'il comprend un moyen actif (69) qui provoque que ledit vérin pneumatique (42) agit dans la direction de serrage également lorsque ledit premier dispositif à soupape (54) se trouve dans la première position de commutation.

3. Dispositif de découpe de plaques selon la revendication 2, **caractérisé par le fait que** ledit moyen actif comprend un deuxième dispositif à soupape (69) qui, au moins lorsque ledit premier dispositif à soupape (54) se trouve dans la première position de commutation, influe sur la pression dans la première chambre de pression (50) et/ou sur la pression dans la deuxième chambre de pression (52) de telle manière que le vérin pneumatique (42) agit dans la direction de serrage.

4. Dispositif de découpe de plaques (10) selon la revendication 3, **caractérisé par le fait que** ledit deuxième dispositif à soupape (69) comprend au moins une première soupape de réglage de pression (70) qui, au moins lorsque le premier dispositif à soupape (54) se trouve dans la première position de commutation, règle à une valeur constante déterminée la pression en laquelle ladite deuxième chambre de pression (52) est alimentée.

5. Dispositif de découpe de plaques (10) selon l'une quelconque des revendications 3 ou 4, **caractérisé par le fait que** ledit deuxième dispositif à soupape (69) comprend une deuxième soupape de réglage de pression (86) qui, au moins lorsque le premier dispositif à soupape (54) se trouve dans la première position de commutation, règle à une valeur réglable souhaitée la pression en laquelle ladite première chambre de pression (50) peut être alimentée.

6. Dispositif de découpe de plaques (10) selon l'une quelconque des revendications 2 à 5, **caractérisé par le fait que** ledit premier dispositif à soupape (54) comprend deux soupapes de commutation (54) montées en série dont la première soupape de commutation (56) fait communiquer une première entrée de la deuxième soupape de commutation (58) avec la source de pression (72) dans une première position de commutation et avec un environnement exempt de pression (74) dans une deuxième position de commutation, et dont la deuxième soupape de commutation (58) bloque sa première entrée dans une première position de commutation et la fait communiquer avec la deuxième chambre de pression (52) dans une deuxième position de commutation.

7. Dispositif de découpe de plaques selon l'une quelconque des revendications 2 à 6, **caractérisé par le fait que** ledit moyen actif comprend une première surface de pression de la première chambre de pression, qui agit dans la direction de serrage ainsi qu'une deuxième surface de pression de la deuxième chambre de pression, qui agit dans la direction d'ouverture, ladite première surface de pression étant plus grande que ladite deuxième surface de pression.

8. Dispositif de découpe de plaques (10) selon l'une quelconque des revendications précédentes, **caractérisé par le fait que** ledit dispositif de serrage (20) comprend, en tant que première portion de serrage, une barre de pression (18) et, en tant que deuxième portion de serrage, une table d'appui (12).

9. Dispositif de découpe de plaques (10) selon l'une quelconque des revendications 1 à 7, **caractérisé par le fait que** ledit dispositif de serrage (36) comprend au moins deux mâchoires de serrage (38, 30) d'une pince de serrage (24).

10. Dispositif de découpe de plaques (10) selon les revendications 5 et 8, **caractérisé par le fait qu'**il comprend une pluralité de pinces de serrage (24) qui sont commandées chacune par une propre deuxième soupape de commutation (58).

11. Dispositif de découpe de plaques (10) selon les revendications 4 et 9 ou 10, **caractérisé par le fait qu'**il comprend une pluralité de pinces de serrage (24) qui sont commandées chacune par une propre première soupape de réglage de pression (70).

12. Dispositif de découpe de plaques (10) selon l'une quelconque des revendications 10 ou 11, **caractérisé par le fait que** la deuxième chambre de pression (52) est connectée à une sortie d'une soupape OU (120) dont la première entrée est connectée à la deuxième soupape de commutation (58) et dont la deuxième entrée est connectée à une troisième soupape de commutation (124) qui fait communiquer la deuxième entrée avec la source de pression (72) dans une première position de commutation et avec ledit environnement exempt de pression (74) dans une deuxième position de commutation.
